Europäisches Patentamt

European Patent Office

Office européen des brevets

(11) Numéro de publication: **0 482 385 B1**

# FASCICULE DE BREVET EUROPEEN

(45) Date de publication de fascicule du brevet: **26.07.95**

(51) Int. Cl.⁶: **C11B 9/00**, A61K 7/46, A23L 1/226

(21) Numéro de dépôt: **91116626.2**

(22) Date de dépôt: **30.09.91**

(54) **(2E,4Z,7Z)-Décatriénoate d'éthyle et son utilisation à titre d'ingrédient parfumant ou aromatisant.**

(30) Priorité: **22.10.90 CH 3361/90**

(43) Date de publication de la demande:
**29.04.92 Bulletin 92/18**

(45) Mention de la délivrance du brevet:
**26.07.95 Bulletin 95/30**

(84) Etats contractants désignés:
**CH DE FR GB LI NL**

(56) Documents cités:
EP-A- 0 269 999
US-A- 3 953 377

JOURNAL OF AGRICULTURAL AND FOOD CHEMISTRY vol. 18, no. 1, Janvier 1970, Washington DC, pp. 19-24; R.K. CREVELING ET AL.: "Volatile Components of Bartlett Pear"

CANADIAN INSTITUTE OF FOOD SCIENCE AND TECHNOLOGY JOURNAL vol. 14, no.2, Avril 1981, CANADA pages 112 - 118; P. SCHREIER ET AL.: 'Volatile Constituents from Concord, Niagara (Vitis labrusca, L.) and Elvira (V.labrusca, L. x V. riparia, M.) Grapes'

(73) Titulaire: **FIRMENICH SA**
**1, route des Jeunes**
**CH-1211 Genève 8 (CH)**

(72) Inventeur: **Naef, Ferdinand**
**30, chemin Vert**
**CH-1227 Carouge (CH)**
Inventeur: **Decorzant, René**
**3, avenue du Gros-Chêne**
**CH-1213 Onex (CH)**
Inventeur: **Naef, Regula**
**30, chemin Vert**
**CH-1227 Carouge (CH)**
Inventeur: **Blanc, Pierre-Alain**
**Chemin du Levrioux**
**CH-1263 Crassier (CH)**
Inventeur: **van Beem, Nicole**
**Les Lavandes,**
**Es Grands Champs**
**CH-1195 Dully (CH)**

(74) Mandataire: **Salvadori, Giuseppe, Dr.**
**c/o Firmenich S.A.**
**Case Postale 239**
**CH-1211 Genève 8 (CH)**

## Description

La présente invention a trait au domaine de la parfumerie et de l'industrie des arômes. Elle concerne, plus particulièrement, un composé nouveau, à savoir le (2E,4Z,7Z)-2,4,7-décatriénoate d'éthyle ainsi que son utilisation à titre d'ingrédient parfumant ou aromatisant.

Plusieurs isomères du décatriénoate d'éthyle, autres que le composé susmentionné, sont connus de l'art antérieur. Il s'agit, en effet, de composés d'origine naturelle qui ont été trouvés dans certaines variétés de poire [voir R.K. Creveling et al., J. Agr. Food Chem. 18, 19 (1970) et références y citées] et dans le raisin [voir P. Schreier et al., Can. Inst. Food Sci. Technol. J. 14, 112 (1981)]. D'autre part, J. Bricout, dans Ind. Alim. Agr. 1977, 277, a fait état d'une analyse de l'eau de vie de la poire William dans laquelle le (2E,4Z,7Z)-2,4,7-décatriénoate d'éthyle a été suggéré comme l'un des composants, sans que, pour autant, l'auteur ait confirmé son hypothèse. Par ailleurs, nous n'avons trouvé dans l'art antérieur susmentionné aucun exemple, ni même suggestion, de l'éventuelle utilité que ces décatriénoates de la poire, et plus particulièrement le (2E,4Z,7Z)-2,4,7-décatriénoate d'éthyle, auraient pu avoir dans la parfumerie. Tout au plus, aurait-on pu penser, en vue des références citées, que lesdits composés pourraient être utiles pour conférer à des compositions aromatisantes des notes fruitées de type poire et/ou raisin, suivant les cas.

Or, nous avons maintenant découvert que le (2E,4Z,7Z)-2,4,7-décatriénoate d'éthyle possède des propriétés odorantes très intéressantes et qu'il peut, de ce fait, être utilisé pour la préparation de compositions parfumantes et articles parfumés de nature variée. Il possède, en effet, une note odorante où le caractère de type poire William est représenté, mais où il est accompagné d'une note verte rappelant le benzoate de cis-3-hexényle [voir S. Arctander, "Perfume and Flavor Chemicals", sect. 1612, Montclair, N.J. (1969)] et d'une note de tête de type feuille de violette. Cette dernière s'avère être particulièrement intéressante, car elle évoque l'odeur de l'heptynecarbonate de méthyle ou de l'octynecarbonate de méthyle [voir réf. citée, sect. 2045 et 2144], produits dont l'usage en parfumerie est soumis à restriction, en raison de leur effet irritant pour la peau.

Cette combinaison de caractères odorants du (2E,4Z,7Z)-2,4,7-décatriénoate d'éthyle, et son utilisation avantageuse en parfumerie, apparaissent comme tout à fait surprenantes en vue de l'art antérieur. En effet, bien qu'il y ait des exemples d'utilisation en parfumerie de certains esters à longue chaîne et odeur fruitée, tels que par exemple le (2E,4Z)-2,4-décadiénoate d'éthyle, aussi nommé "ester de poire", cette utilisation est plutôt rare et est souvent restreinte à des applications où l'on désire accentuer le caractère fruité des compositions auxquelles on ajoute ces composés [voir, par exemple, le brevet US 3,928,402].

Or, si le (2E,4Z,7Z)-2,4,7-décatriénoate d'éthyle est bien à même de conférer aux compositions parfumantes dans lesquelles il est intégré le caractère fruité caractéristique de la poire William, il leur confère également une note verte, feuille de violette tout à fait inattendue et fort avantageuse, car elle permet d'obvier à l'inconvénient de l'usage des alcynecarbonates de méthyle cités dans les applications typiques de ces derniers. D'autre part, nous avons constaté que la note poire de ce décatriénoate, tout en rappelant celle dudit "ester de poire", est beaucoup plus puissante que cette dernière.

De par ses qualités olfactives, le (2E,4Z,7Z)-2,4,7-décatriénoate d'éthyle se prête à un usage en parfumerie dans des compositions de nature très variée. C'est ainsi qu'il se révèle avantageux aussi bien dans des compositions à caractère fruité-poire, que dans des compositions florales, vertes, boisées ou encore à caractère mixte. Dans ces applications, il peut être employé soit seul, soit en mélange avec d'autres co-ingrédients parfumants, des solvants ou adjuvants usuels. Une énumération plus détaillée de ces co-ingrédients est ici superflue, l'homme du métier étant à même d'en trouver des exemples dans des ouvrages de référence tels que le livre de S. Arctander cité plus haut.

L'ester faisant l'objet de la présente invention se révèle utile aussi bien en parfumerie fine que dans des applications de type fonctionnel. Parmi les articles dans lesquels il peut être employé en tant qu'ingrédient parfumant, on peut citer les parfums ou eaux de toilette, les savons, les gels de douche ou bain, les shampoings ou autres articles destinés au traitement et hygiène des cheveux, les désodorisants corporels ou d'air ambiant, les détergents ou adoucissants textiles ou, encore, les produits d'entretien.

Les concentrations dans lesquelles le (2E,4Z,7Z)-2,4,7-décatriénoate d'éthyle peut être utilisé pour obtenir les effets parfumants désirés varient dans une gamme de valeurs très étendue, étant bien connu que ces valeurs dépendent et de la nature de l'article à parfumer et de l'effet odorant recherché. C'est ainsi que des concentrations de l'ordre de 5 à 10%, ou encore 20% en poids dudit ester, par rapport au poids de la composition, sont tout à fait appropriées lorsque le composé est ajouté à des compositions parfumantes variées. Des concentrations nettement inférieures à ces valeurs peuvent être employées lorsqu'il est utilisé pour le parfumage d'articles divers tels que ceux cités plus haut.

Par ailleurs, nous avons également découvert que le (2E,4Z,7Z)-2,4,7-décatriénoate d'éthyle présente également un intérêt pour les arômes et qu'il peut être avantageusement employé pour l'aromatisation de compositions de nature très variée, comme il ressort des exemples d'application présentés plus loi, ayant trait au domaine des arômes. Le composé susmentionné possède, en effet, une note aromatique de type vert, métallique, végétal, gaz, soufré et acrylique qui rappelle en particulier la note aromatique de l'acétate de carvéol.

Les propriétés aromatiques de ce composé sont telles que son champ d'application est très étendu et les effets aromatisants que l'on peut obtenir en ajoutant ce composé à des arômes de base sont extrêmement variés. C'est ainsi que l'on a découvert des effets organoleptiques avantageux lorsqu'on ajoutait ledit composé à des compositions aromatisantes de base de type aussi varié que menthe, cassis, ananas, orange, fruits exotiques ou même rhum, cresson, moutarde, broccoli, compositions dans lesquelles le (2E,4Z,7Z)-2,4,7-décatriénoate d'éthyle peut servir à renforcer la note de base, comme dans le cas des arômes de type menthe, ainsi qu'à développer ou renforcer les tonalités fraîches et juteuses comme dans les compositions de type fruité. Les exemples d'application apparaissant plus loin décrivent plus en détail ces effets aromatisants.

Pour produire ces derniers, le composé de l'invention est utilisé de préférence dans des gammes de concentration relativement faibles, typiquement entre 0,1 et 1% en poids, par rapport au poids de la composition. Bien entendu, suivant l'application, ces valeurs peuvent varier, mais l'homme du métier est à même de modifier ces concentrations en fonction de la nature des autres ingrédients dans la composition et de l'effet aromatisant qu'il désire obtenir.

Les composés de l'invention se prêtent à l'aromatisation d'articles divers tels les aliments, les boissons, les chewing-gums, les dentifrices ou encore les préparations pharmaceutiques.

A titre d'aliment pouvant être aromatisé, on peut mentionner les glaces, les crèmes à dessert, les yogourts, les produits lactés en général, les produits de confiserie ou de boulangerie, les sirops, les sucres cuits ou les confitures, ou encore les soupes et bouillons, les extraits pour la préparation de soupes et de sauces, les épices ou, en général, les produits dans lesquels on cherche à imiter les caractères gustatifs des légumes et épices cités plus haut. On peut citer également les aliments du type amuse-gueule, chips ou autres.

Les composés de formule (I) sont incorporés aux aliments, boissons, chewing-gums, dentifrices ou préparations pharmaceutiques que l'on désire aromatiser selon des procédés usuels dans l'art, soit seuls, soit en mélange avec d'autres ingrédients aromatisants naturels ou synthétiques. Ils peuvent être employés tels quels ou en solution dans l'un des solvants comestibles usuels tels la triacétine, l'alcool éthylique ou le propylène glycol, ou en mélange sur un support solide, par exemple, une dextrine ou la gomme arabique.

Le (2E,4Z,7Z)-2,4,7-décatriénoate d'éthyle peut être préparé par une réaction de type Wittig entre le bromure de (3Z)-hexényltriphénylphosphonium et le 4-oxo-(2E)-buténoate d'éthyle. Ces deux produits de départ peuvent être préparés comme il est décrit, respectivement, par B. Maurer et al. dans Helv. Chim. Acta <u>65</u>, 462 (1982) et P.L. Stotter et al., dans Tetrahedron Lett. <u>1973</u>, 2417. Pour le préparer, on a procédé comme suit : deux charges de 42,5g (0,1 mole) de bromure de (3E)-hexényl-triphénylphosphonium en suspension dans 300 ml d'éther absolu ont été traitées, sous agitation et à 15/20°C, avec 55,5 ml (0,1 mole) de n-butyllithium 1,8 M en solution dans l'hexane. Le mélange est devenu rouge intense et les cristaux ont disparu. L'agitation a été poursuivie pendant 2 h à 20°C. On a ajouté ensuite 14,1 g (0,11 mole) de 4-oxobuténoate d'éthyle en solution dans 100 ml d'éther absolu, en maintenant la température entre 0 et 10°C. Un précipité s'est formé et la solution est devenue jaune-brune. L'agitation a été poursuivie pendant 2 h à 20°C. Le mélange réactionnel a été versé sur une solution saturée de chlorure d'ammonium glacée et la phase organique a été décantée. On a encore extrait la phase aqueuse à l'éther (200 ml). On a lavé successivement avec HCl 1 N (100 ml), NaHCO$_3$ sat (100 ml), eau (100 ml) et eau saturée de sel (100 ml). Après séchage sur MgSO$_4$ et concentration au rotavapeur, on a obtenu environ 30 g de produit brut. Ce produit a été dilué au pentane (2 x 200 ml), une partie s'étant révélée insoluble. On a placé le mélange au frigo pendant quelques heures et ensuite décanté la solution pentanique et concentré au rotavapeur. On a obtenu 14,1 g d'extrait au premier traitement et 2,9 g d'extrait au deuxième. On a réuni ces extraits et distillé au four à boules (P. éb. 90-100°C/53 Pa) pour obtenir 10,4 g d'un mélange contenant 60% de l'ester désiré. Une chromatographie sur colonne de SiO$_2$ (300 g), en utilisant un mélange cyclohexane/éther 99:1 comme éluant, a fourni trois fractions, parmi lesquelles une contenait 7,2 g de l'ester désiré à l'état pur. Cette fraction a été distillée sur colonne Vigreux (~10 cm) à 58-60°C/40 Pa pour fournir 5,86 g de (2E,4Z,7Z)-2,4,7-décatriénoate d'éthyle pur (rend. 7%) dont les données analytiques étaient les suivantes :

RMN($^1$H, 360MHz) : 0,99(t, J = 7Hz, 3H) ; 1,31(t, J = 7Hz, 3H) ; 2,10(dxq, J = 7, 7Hz, 2H) ; 3,05(dxd, J = 7, 7Hz, 2H) ; 4,22(q, J = 7Hz, 2H) ; 5,31(dxt, J = 7, 11Hz, 1H) ; 5,46(dxt, J = 7, 11Hz, 1H) ; 5,81(dxt, J = 7, 11Hz, 1H) ; 5,88(d, J = 14Hz, 1H) ; 6,13(dxd, J = 11, 11Hz, 1H) ; 7,66(dxd, J = 11, 14Hz, 1H) $\delta$ ppm.

RMN($^{13}$C, 90MHz) :    167,2(s) ; 139,1(d) ; 133,3(d) ; 126,5(d) ; 125,4(d) ; 121,8(d) ; 60,3(t) ; 26,5(t) ;
20,6(t) ; 14,3(q) ; 14,1(q) $\delta$ ppm.

SM :    194(2), 179(1), 165(3), 149(9), 133(3), 121(39), 105(24), 97(36), 91(64), 79(100),
67(26), 55(41), 43(40).

L'invention sera maintenant décrite plus en détail à l'aide des exemples présentés ci-après.

Exemple 1

Composition parfumante

On a préparé une composition parfumante de base de type fruité-poire en mélangeant les ingrédients
suivants :

| Ingrédients | Parties en poids |
|---|---|
| Acétate d'hexyle | 1 |
| Acétate d'octyle | 1 |
| Acétate TCD [1] | 10 |
| Cinnamate de méthyle | 3 |
| $\gamma$-Dodécalactone | 1 |
| $\gamma$-Décalactone à 10% * | 6 |
| $\beta$-Damascone à 50% ** | 3 |
| Isopentyrate [2] | 2 |
| MYROXYDE ® [3] | 1 |
| Veloutone [4] | 7 |
| BOURGEONAL ® [5] à 50% * | 1 |
| Linalol | 13 |
| Acétate de linalyle | 16 |
| LILIAL® [6] | 5 |
| GALAXOLIDE ® [7] 50 | 20 |
| MAYOL ® [8] | 5 |
| Total | 95 |

* dans le dipropylèneglycol

** dans le citrate d'éthyle

1) acétate de (tricyclo[5.2.1.0$^{2,6}$]déc-4-yl)méthyle ; origine : Firmenich
SA, Genève, Suisse

2) isobutyrate de 1,3-diméthyl-3-buténﾟyle ; origine : Firmenich SA,
Genève, Suisse

3) mélange d'isomères de l'époxyde d'ocimène ; origine : Firmenich
SA, Genève, Suisse

4) 2,5,5-triméthyl-2-pentyl-cyclopentanone ; origine : Firmenich SA,
Genève, Suisse

5) 3-(4-tert-butyl-1-phényl)propanal ; origine : Quest International

6) 3-(4-tert-butyl-1-phényl)-2-méthylpropanal ; origine : L. Givaudan,
Vernier, Suisse

7)
1,3,4,6,7,8-hexahydro-4,6,6,7,8,8-hexaméthyl-cyclopenta[g]isochromène ; origine : IFF Inc., USA

8) 4-isopropyl-cyclohexylméthanol ; origine : Firmenich SA, Genève,
Suisse

Lorsqu'on a ajouté à cette composition de base 5 à 10% en poids, par rapport au poids de la composition,
de (2E,4Z,7Z)-2,4,7-décatriénoate d'éthyle on a obtenu une nouvelle composition dont l'odeur avait un net
caractère poire William très naturel, évoquant le côté naturel et juteux de la poire. La note chimique de la
composition de base avait totalement disparu, et la note originale de fruit un peu vert avait cédé la place à
une note très naturelle de poire mûre.

Exemple 2

Composition parfumante

On a préparé une composition de base destinée à une eau de Cologne masculine en mélangeant les ingrédients suivants :

| Ingrédients | Parties en poids |
|---|---|
| Acétate de géranyle à 10% * | 50 |
| Acétate de néryle à 10% * | 80 |
| Acétate de linalyle | 140 |
| Undécalactone | 80 |
| Benzoate de benzyle | 500 |
| Essence de bergamote | 1120 |
| Essence de citron | 120 |
| Coumarine | 100 |
| Dihydromyrcénol [1] | 160 |
| Eugénol à 10% * | 80 |
| GALAXOLIDE ® [2] 50 | 1000 |
| Hydroxycitronellal | 30 |
| Indol à 10% * | 50 |
| Isobutylquinoléine [3] | 20 |
| Isocyclemone E [4] | 2080 |
| LYRAL ® [5] | 500 |
| Essence de mandarine | 580 |
| Mousse cristal [6] | 280 |
| Essence de muscade | 60 |
| HEDIONE ® [7] | 210 |
| Essence de patchouli | 140 |

| | |
|---|---|
| Salicylate d'amyle | 160 |
| SANDELA ® 8) | 300 |
| TONALID ® 9) | 820 |
| Vertofix coeur 10) | 980 |
| Essence de violette à 10% * | 80 |
| 2,4-diméthyl-3-cyclohexène-2-carbaldéhyde 11) à 10% * | 60 |
| 1-(2,6,6-triméthyl-1-cyclohexyl)-3-hexanol 11) à 10% * | 120 |
| | |
| Total | 9900 |

\*    dans le dipropylèneglycol

1)    2,6-diméthyl-7-octén-2-ol ; origine : IFF Inc., USA

2)    voir exemple 1

3)    6-(1-méthylpropyl)quinoléine ; origine : IFF Inc., USA

4)    mélange isomérique de 2-acétonaphtone-1,2,3,4,5,6,7,8-octahydro-2,3,8,8-tétraméthyle ; origine : IFF Inc., USA

5)    4-(4-hydroxy-4-méthylpentyl)-3-cyclohexène-1-carboxaldéhyde ; origine : IFF Inc., USA

6)    2,4-dihydroxy-3,5-diméthylbenzoate de méthyle

7)    dihydrojasmonate de méthyle ; origine : Firmenich SA, Genève, Suisse

8)    mélange isomérique de 3-(isocamphyl-5)-cyclohexan-1-ol ; origine : L. Givaudan, Vernier, Suisse

9)    7-acétyl-1,1,3,4,4,6-hexaméthyltétraline ; origine : PFW Inc., Hollande

10)   origine : IFF Inc., USA

11)   origine : Firmenich SA, Genève, Suisse

A cette composition de base de type hespéridé-vert-boisé on a ajouté 100 parties en poids de (2E,4Z,7Z)-2,4,7-décatriénoate d'éthyle. La composition a alors pris un caractère vert, avec une connotation feuilles de violette. L'adjonction du composé susmentionné à la composition de base a, en effet, permis d'obtenir un effet olfactif qui a été jugé tout à fait semblable à l'effet odorant que l'on obtiendrait, dans les mêmes conditions, avec l'heptyne ou octynecarbonate de méthyle.

Exemple 3

a) Composition aromatisante de type menthe

On a préparé une composition de base de type menthe, en mélangeant les ingrédients suivants :

| Ingrédients | Parties en poids |
|---|---|
| Acétate de carvéol à 10% * | 10 |
| lévo-Carvone | 200 |
| Eucalyptol | 5 |
| Menthone | 60 |
| Menthofurane à 10% * | 10 |
| Alcool phényléthylique | 5 |
| Terpinéol | 5 |
| Triacétine | 705 |
| Total | 1000 |

\* dans la triacétine

La base de type menthe ainsi obtenue a servi à préparer deux compositions aromatisantes par mélange avec les ingrédients suivants :

| Ingrédients | Compositions (parties en poids) | |
|---|---|---|
| | A | B |
| Base menthe | 50 | 50 |
| (2E,4Z,7Z)-2,4,7-Décatriénoate d'éthyle à 10% * | - | 5 |
| Ethanol à 95% | 950 | 945 |
| | 1000 | 1000 |

\* dans l'éthanol à 95%

Ces deux compositions ont alors été évaluées par un panel de neuf experts aromaticiens à 0,1% dans de l'eau de source sucrée acidulée (10% de sucre, 0,1% d'acide citrique). Ces experts ont préféré la nouvelle composition B jugeant qu'elle possédait un goût de menthe crépue, carvone nettement plus renforcé que celui de la composition de base.

b) Huiles essentielles de menthe crépue et poivrée

On a également ajouté à une huile essentielle de menthe crépue et à une huile essentielle de menthe poivrée 0,2% en poids du composé faisant l'objet de l'invention. Les nouvelles huiles essentielles ainsi obtenues ont ensuite été évaluées par les experts aromaticiens qui les ont trouvées améliorées du point de vue gustatif, le caractère carvone et acétate de carvéol de l'essence de menthe crépue ayant été renforcé par l'addition du (2E,4Z,7Z)-2,4,7-décatriénoate d'éthyle, et l'essence de menthe poivrée possédant alors plus de corps.

Exemple 4

Composition aromatisante fruitée, de type cassis

On a préparé une composition de base de type cassis en mélangeant les ingrédients suivants :

| Ingrédients | Parties en poids |
|---|---|
| Acétate d'éthyle | 10 |
| Acide acétique | 10 |
| 4-para-Hydroxy-phénylbutanone | 105 |
| Butyrate d'éthyle | 150 |
| Maltol | 10 |
| Méthylbutyrate d'éthyle | 5 |
| Diméthylsulfure | 30 |
| Méthylcyclopenténolone à 10%* | 5 |
| cis-3-Hexenol | 5 |
| Triacétine | 610 |
| Vanilline | 25 |
| α-Ionone à 10%* | 10 |
| Huile essentielle de Buchu | 5 |
| Acide méthylbutyrique à 10%* | 5 |
| Mercaptomenthone à 10%* | 15 |
| Total | 1000 |

* dans la triacétine

La base de type cassis ainsi obtenue a servi à préparer deux compositions aromatisantes par mélange des ingrédients suivants :

| Ingrédients | Compositions (parties en poids) | |
|---|---|---|
| | A | B |
| Base cassis | 100 | 100 |
| (2E,4Z,7Z)-2,4,7-Décatriénoate d'éthyle à 10%* | - | 10 |
| Ethanol à 95% | 900 | 890 |
| | 1000 | 1000 |

* dans l'éthanol à 95%

Ces deux compositions ont alors été évaluées dans les conditions décrites à l'Exemple 3. De l'avis des experts, la composition B possédait un goût de cassis plus juteux que la composition de base.

Exemple 5

Composition aromatisante fruitée, de type ananas

On a préparé une composition de base de type ananas en mélangeant les ingrédients suivants :

| Ingrédients | Parties en poids |
|---|---|
| Butyrate d'éthyle | 50 |
| Caproate d'allyle | 50 |
| Caproate d'éthyle | 20 |
| δ-Dodécalactone | 5 |
| 2,5-Diméthyl-4-hydroxy-3(2H)-furanone | 100 |
| Méthylthiopropionate de méthyle | 5 |
| Triacétine | 770 |
| Total | 1000 |

On a ensuite préparé avec cette composition de base et les autres ingrédients cités ci-après deux compositions A et B :

| Ingrédients | Compositions (parties en poids) | |
|---|---|---|
| | A | B |
| Base ananas | 100 | 100 |
| (2E,4Z,7Z)-2,4,7-Décatriénoate d'éthyle à 10%* | - | 5 |
| Ethanol à 95% | 900 | 895 |
| | 1000 | 1000 |

\* dans l'éthanol à 95%

Lors de l'évaluation de ces deux compositions dans des conditions similaires à celles décrites à l'Exemple 3, les experts aromaticiens ont préféré la composition B, dont le goût ananas possédait une tonalité fraîche et fibreuse plus renforcée par rapport à la composition A.

Exemple 6

Composition aromatisante fruitée, de type mangue

On a préparé une composition de base de type mangue en mélangeant les ingrédients suivants :

| Ingrédients | Parties en poids |
|---|---|
| Huile essentielle de Buchu à 10%* | 15 |
| Butyrate d'éthyle | 100 |
| Caproate d'éthyle | 50 |
| $\gamma$-Décalactone | 30 |
| Butyrate de géranyle | 20 |
| Hexanal | 5 |
| cis-3-Hexénol | 10 |
| Acétate d'hexyle | 40 |
| Caproate d'hexyle | 40 |
| $\alpha$-Ionone à 0,1%* | 10 |
| Cinnamate d'isobutyle | 30 |
| Orange TETRAROME® [1] | 20 |
| Citron TETRAROME® [2] | 25 |
| Ethanol à 95% | 605 |
| Total | 1000 |

\* dans l'éthanol

1) huile essentielle d'orange déterpénée ; origine : Firmenich SA, Genève

2) huile essentielle de citron déterpénée ; origine : Firmenich SA, Genève

Cette base de type mangue a servi à préparer deux compositions aromatisantes par mélange avec les ingrédients suivants :

| Ingrédients | Compositions (parties en poids) | |
|---|---|---|
| | A | B |
| Base mangue | 100 | 100 |
| (2E,4Z,7Z)-2,4,7-Décatriénoate d'éthyle à 10%* | - | 10 |
| Ethanol à 95% | 900 | 890 |
| | 1000 | 1000 |

\* dans l'éthanol à 95%

Lors de l'évaluation de ces deux compositions, dans les conditions décrites à l'Exemple 3, les experts aromaticiens ont été de l'avis que la composition B possédait une note aromatique plus arrondie que la composition A.

Exemple 7

Composition aromatisante de type orange

On a préparé une composition aromatisante de base de type orange en mélangeant les ingrédients suivants :

| Ingrédients | Parties en poids |
|---|---|
| Acétoacetate d'éthyle | 3 |
| Hexanal à 10%* | 4 |
| Octanal à 10%* | 2 |
| Butyrate d'éthyle | 2 |
| Caryophyllène à 10%* | 5 |
| Acétaldéhyde à 10%* | 15 |
| Huile essentielle de grapefruit | 5 |
| Citron TETRAROME® [1] | 5 |
| Huile essentielle de mandarine | 2 |
| Aldéhyde acétique | 60 |
| Huile essentielle d'orange | 897 |
| Total | 1000 |

\* dans l'huile essentielle d'orange
1) voir Exemple 6

La base orange ainsi obtenue a été utilisée dans la préparation de deux compositions aromatisantes par mélange avec les ingrédients suivants :

| Ingrédients | Compositions (parties en poids) | |
|---|---|---|
| | A | B |
| Base orange | 100 | 100 |
| (2E,4Z,7Z)-2,4,7-Décatriénoate d'éthyle à 1%* | - | 10 |
| Ethanol à 95% | 900 | 890 |
| | 1000 | 1000 |

\* dans l'éthanol à 95%

Ces deux compositions ont ensuite été évaluées dans les conditions décrites à l'Exemple 3. De l'avis des experts aromaticiens, la composition B possédait une tonalité plus juteuse que la composition A.

Exemple 8

Composition aromatisante de type rhum

On a préparé une composition de base de type rhum en mélangeant les ingrédients suivants :

| Ingrédients | Parties en poids |
|---|---|
| Acide isobutyrique redistillé | 5 |
| Essence de benjoin Sumatra à 50%* | 10 |
| Butyrate d'éthyle | 20 |
| Essence de cannelle de Chine à 10%* | 5 |
| Caproate d'éthyle à 10%* | 5 |
| Essence de girofle anglaise à 10%* | 10 |
| Lactate d'éthyle à 10%* | 15 |
| Rhum concentré | 910 |
| Vanilline | 20 |
| Total | 1000 |

\* dans l'éthanol à 95%

Cette base rhum a servi à préparer deux compositions aromatisantes par mélange avec les ingrédients suivants :

| Ingrédients | Compositions (parties en poids) | |
|---|---|---|
| | A | B |
| Base rhum | 500 | 500 |
| (2E,4Z,7Z)-2,4,7-Décatriénoate d'éthyle à 1%* | - | 25 |
| Ethanol à 95% | 500 | 475 |
| | 1000 | 1000 |

* dans l'éthanol à 95%

Lors de l'évaluation de ces deux compositions, dans les conditions décrites à l'Exemple 1, les experts aromaticiens ont préféré la composition B, dont le côté phénolique et pyrogène typique du rhum était, à leur avis, accentué.

**Revendications**

1. Utilisation du (2E,4Z,7Z)-2,4,7-décatriénoate d'éthyle à titre d'ingrédient parfumant ou aromatisant.

2. Composition parfumante ou aromatisante contenant le (2E,4Z,7Z)-2,4,7-décatriénoate d'éthyle à titre d'ingrédient actif.

3. Article parfumé ou aromatisé contenant le (2E,4Z,7Z)-2,4,7-décatriénoate d'éthyle à titre d'ingrédient parfumant, respectivement aromatisant.

4. A titre d'article parfumé selon la revendication 3, un parfum ou une eau de toilette, un savon, un gel de douche ou bain, un shampoing, un désodorisant corporel ou d'air ambiant, un détergent ou un adoucissant textile, ou un produit d'entretien.

5. A titre d'article aromatisé selon la revendication 3, un aliment, une boisson, un chewing-gum, un dentifrice ou une préparation pharmaceutique.

6. Procédé pour conférer, modifier, améliorer ou augmenter le caractère odorant de type poire, vert, feuille de violette d'une composition parfumante ou d'un article parfumé, caractérisé en ce qu'on ajoute à ladite composition ou audit article du (2E,4Z,7Z)-2,4,7-décatriénoate d'éthyle.

7. Composition parfumante ou article parfumé à caractère odorant du type poire, vert, feuille de violette, susceptible d'être obtenue par le procédé selon la revendication 6.

8. (2E,4Z,7Z)-2,4,7-Décatriénoate d'éthyle.

**Claims**

1. Use of ethyl (2E,4Z,7Z)-2,4,7-decatrienoate as a perfuming or flavouring ingredient.

2. Perfuming or flavouring composition containing ethyl (2E,4Z,7Z)-2,4,7-decatrienoate as an active ingredient.

3. Perfumed or flavoured article containing ethyl (2E,4Z,7Z)-2,4,7-decatrienoate as a perfuming, respectively flavouring ingredient.

4. As perfumed article according to claim 3, a perfume or a cologne, a soap, a bath or shower gel, a shampoo, a body deodorant or an air-freshener, a detergent or a fabric softener, or a household product.

5. As flavoured article according to claim 3, a foodstuff, a drink, a chewing-gum, a toothpaste or a pharmaceutical preparation.

6. Process to impart, modify, improve or enhance the pear, green, violet leaf type odour character of a perfuming composition or of a perfumed article, characterized in that ethyl (2E,4Z,7Z)-2,4,7-decatrienoate is added to said composition or article.

7. Perfuming composition or perfumed article having a pear, green, violet leaf type odour character, susceptible of being obtained by the process according to claim 6.

8. Ethyl (2E,4Z,7Z)-2,4,7-decatrienoate.

**Patentansprüche**

1. Verwendung von (2E,4Z,7Z)-2,4,7-Ethyldekatrienoat als Riechstoff- oder als Aromatisierungsbestandteil.

2. Riechstoff- oder Aromatisierungskomposition, enthaltend das (2E,4Z,7Z)-2,4,7-Ethyldekatrienoat als Wirkstoff.

3. Parfümierter oder aromatisierter Artikel, enthaltend (2E,4Z,7Z)-2,4,7-Ethyldekatrienoat als Riechstoff-beziehungsweise Aromatisierungsbestandteil.

4. Als parfümierter Artikel gemäss Patentanspruch 3, ein Parfüm oder ein Toilettwasser, eine Seife, ein Douche- oder Badegel, ein Shampoo, ein Körperdesodorant oder ein Raumluftverbesserer, ein Detergenz oder ein Textilauffrischungsmittel oder ein Pflegeprodukt.

5. Als aromatisierter Artikel gemäss Patentanspruch 3, ein Nahrungsmittel, ein Getränk, ein Kaugummi, eine Zahnpasta oder eine pharmazeutische Zubereitung.

6. Ein Verfahren zum Verleihen, Verändern, Verbessern oder Verstärken des Duftcharakters vom Birnen-, Grün-, Veilchenblattypus einer Riechstoffkomposition oder eines parfümierten Artikels, dadurch gekennzeichnet, dass man zu dieser Komposition oder zu diesem Artikel (2E,4Z,7Z)-2,4,7-Ethyldekatrienoat hinzufügt.

7. Riechstoffkomposition oder parfümierter Artikel vom Duftcharakter des Birnen-, Grün- oder Veilchenblattypus, der geeignet ist, gemäss dem Verfahren des Patentanspruches 6 erhalten zu werden.

8. (2E,4Z,7Z)-2,4,7-Ethyldekatrienoat.